(19) Europäisches Patentamt
European Patent Office
Office européen des brevets

(11) **EP 0 916 042 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(21) Anmeldenummer: **97940027.2**

(22) Anmeldetag: **25.07.1997**

(51) Int Cl.7: **F16H 61/00**

(86) Internationale Anmeldenummer:
**PCT/EP1997/004046**

(87) Internationale Veröffentlichungsnummer:
**WO 1998/005886 (12.02.1998 Gazette 1998/06)**

(54) **VERFAHREN ZUR VORGABE DES BETRIEBSPUNKTS EINES AUTOMATISCHEN GETRIEBES, INSBESONDERE EINES STUFENLOSEN GETRIEBES**

PROCESS DETERMINING THE OPERATING POINT OF AN AUTOMATIC TRANSMISSION, ESPECIALLY OF AN INFINITELY VARIABLE TRANSMISSION

PROCEDE POUR DETERMINER LE POINT DE FONCTIONNEMENT DYNAMIQUE D'UNE BOITE DE VITESSES AUTOMATIQUE, NOTAMMENT D'UNE BOITE DE VITESSE A VARIATION CONTINUE

(84) Benannte Vertragsstaaten:
**BE DE FR GB**

(30) Priorität: **01.08.1996 DE 19631070**

(43) Veröffentlichungstag der Anmeldung:
**19.05.1999 Patentblatt 1999/20**

(73) Patentinhaber: **ZF-Batavia, L.L.C.**
**Plymouth, Michigan 48170-2456 (US)**

(72) Erfinder:
• **DANZ, Wolfgang**
**D-88046 Friedrichshafen (DE)**
• **SPEICHER, Patrick**
**D-88094 Oberteuringen (DE)**
• **VORNDRAN, Ralf**
**D-88131 Bodolz (DE)**
• **GILLICH, Udo**
**D-88074 Meckenbeuren (DE)**

(74) Vertreter: **Zietlow, Karl-Peter**
**ZF FRIEDRICHSHAFEN AG**
**88038 Friedrichshafen (DE)**

(56) Entgegenhaltungen:
EP-A- 0 364 270          EP-A- 0 657 668
WO-A-97/25557            DE-A- 4 223 967
DE-A- 4 312 415          DE-A- 4 445 325
DE-A- 19 600 915         US-A- 4 653 006
US-A- 5 012 697

**Beschreibung**

Die Erfindung bezieht sich auf ein Verfahren zur Vorgabe des Betriebspunktes eines automatischen Getriebes, insbesondere eines stufenlosen Getriebes, mit Mitteln zum Erfassen von Eingangssignalen, die von einem Fahrer-Fahrzeugsystem abgeleitet sind und die mindestens zu einem Ausgangssignal verarbeitet werden, durch das im Rahmen einer Betriebsstrategie eine Vorgabe des Übersetzungsverhältnisses und/oder eine Vorgabe der Drehzahl eines Antriebsmotors und/oder eine Vorgabe der Fahrzeugbeschleunigung oder dergleichen herbeigeführt wird.

Beim Anforderungsprofil einer Fahrstrategie für ein stufenloses Getriebe liegen die Schwerpunkte bei einer guten Fahrbarkeit (Driveability), einem günstigen Verbrauch und einem in der Praxis vertretbaren Applikationsaufwand. Bei der Umsetzung einer Fahrstrategie soll der Ressourcenbedarf gering sein. Die Fahrstrategie soll sich an verschiedene Fahrsituationen (Fahrer, Fahrzeug und Umwelt) automatisch anpassen. Das System soll bei praxisüblichen Abweichungen unempfindlich reagieren, d. h. eine gewisse Robustheit aufweisen.

Bei der Lösung nach der DE-A 43 12 415 werden Kennlinien miteinander zu einem Schaltkennfeld verknüpft, bei dem eine Begrenzungslinie einer Kennlinie eines optimierten Verbrauchs und eine weitere Begrenzungslinie einer Kennlinie optimierter Leistung entspricht. Die zwischen diesen Begrenzungslinien liegenden Betriebspunkte liegen auf sogenannten dynamischen Kennlinien, deren Lage von der Größe der Änderungsgeschwindigkeit der Leistungsanforderung abhängt.

In der EP-A 0 657 668 werden zwei geschwindigkeitsabhängige Leistungs-Grenzkurven als Kennlinien in das P-v-Diagramm eingetragen. Diesen Kennlinien wird eine minimale und eine maximale Bewertungszahl zugeordnet. Die aktuelle Motorleistung wird bestimmt und mit den beiden Grenzkurven verglichen. Durch den Vergleich erhält man aktuelle Bewertungszahlen, die gefiltert werden. Anhand der gefilterten Bewertungszahl werden zweidimensionale Kennlinien bzw. dreidimensionale Kennlinienfelder zur Steuerung der Antriebseinheit ermittelt.

Das bekannte Verfahren ist in Teilaspekten einer Fahrstrategie vorteilhaft, weil die aktuelle Bewertungszahl durch einfache Interpolation aufgefunden werden kann. Das Beeinflussen des Zeitverhaltens über einen geeigneten Filter soll keinen großen Aufwand voraussetzen. Bei dem bekannten Verfahren bleibt hingegen offen, wie andere, nicht minder wichtige Teilaspekte des Anforderungsprofils berücksichtigt werden könnten.

Um die Entwicklungszeiten zu reduzieren, wird bei der Vorrichtung zum Steuern eines stufenlosen Getriebes nach der DE-A 44 45 325 vorgeschlagen, das Motordrehmoment zu schätzen, um ein Getriebe-Eingangsdrehmoment zu berechnen. Durch Vergleich des berechneten Getriebe-Eingangsdrehmoments mit einem Soll-Antriebswellendrehmoment, das auf den die Motorlast angegebenen Parametern beruht, wird ein Soll-Übersetzungsverhältnis bestimmt. Aus Soll-Antriebswellendrehmoment-Kennfeldern wird ein Soll-Übersetzungsverhältnis entnommen, das mit dem aktuellen Übersetzungsverhältnis des stufenlosen Getriebes verglichen wird. Aus der Differenz wird eine Stellgröße abgeleitet, um das tatsächliche Übersetzungsverhältnis dem Soll-Übersetzungsverhältnis anzugleichen. Auch diese Lösung setzt mehrere Kennfelder voraus, um eine aktuelle Fahrweise zu berücksichtigen.

Bei der Einrichtung nach der DE-A 42 23 967 wird ein Getriebe-Abtriebsmoment im Rahmen einer vorgegebenen Betriebsstrategie eingestellt. Die vorgebbare Betriebsstrategie repräsentiert ein sportliches oder ein verbrauchsgünstiges Fahrverhalten. Durch Verbrauchsmessungen wird ein Kennfeld insbesondere mit Stützstellen ermittelt. Der SollWert der Getriebeübersetzung wird in Abhängigkeit einer Mindestdrehzahl des Motors und eines gewünschten Abtriebsmoments so klein wie möglich gewählt.

Das stufenlose Getriebe reagiert in besonderen Situationen mit einem ungleichmäßigen Beschleunigungsverhalten. Das subjektive Fahrempfinden (Driveability) läßt sich objektiv durch folgendes Verhalten verdeutlichen: Auf eine sprungförmige Änderung der Drosselklappenstellung springt der Soll-Drehzahlwert des Antriebsmotors in die Höhe. Im Gegensatz zu dieser signifikanten Erhöhung der Motordrehzahl bleibt die Fahrzeuggeschwindigkeit über einen gewissen Zeitraum zunächst konstant. Nachteilig ist vor allem, daß der Fahrer demnach zunächst keine Beschleunigung des Fahrzeuges verspürt. Unter ungünstigen Verhältnissen kann eine kurzzeitige Verzögerung des Fahrzeugs auftreten. Der Fahrer versucht, diese Situation dadurch zu bereinigen, indem er einen noch höheren Leistungsbedarf anmeldet. Die Folge hiervon ist ein Übersteuern der Drosselklappe.

In der WO 97/25557 A1 (nächstkommender stand der Technik nach Artikel 54 (3) und (4) EPÜ, für die Benennungsstaaten DE, FR, GB) wird ein Verfahren zur Vorgabe der Übersetzung eines stufenlosen Getriebes beschrieben. Dafür wird ein Fahrbereich über eine variable obere und untere Grenze bestimmt. Diese Grenzen werden über Wertepaare wie z.B. der Übersetzung des Getriebes und der Fahrzeuggeschwindigkeit generiert. Eine aktuelle Betriebspunktvorgabe liegt dabei innerhalb des vorgegebenen Fahrbereiches, wobei die aktuelle Betriebspunktvorgabe ausschließlich aufgrund der aktuell vorliegenden Situation eingestellt wird. Über einen Funktionsblock zur Signalgenerierung werden hierbei Signale, wie beispielsweise eine Drosselklappeninformation, die Drehzahlen der Primär- und Sekundärscheiben des Getriebes, die Fahrzeugbeschleunigung und das Übersetzungsverhältnis erfaßt. Ebenso werden ein Leistungswunsch und manuelle Fahrereingriffe, sowie der Fahrwiderstand berücksichtigt.

Der vorliegenden Erfindung liegt die Aufgabe zugrunde, ein Verfahren zur Vorgabe des Betriebspunktes eines stufenlosen Getriebes zu schaffen, das sich an übergeordneten Größen, wie z. B. einem Fahrerwunsch, einer Fahrweise und einem Fahrzustand, orientiert.

Diese Aufgabe wird mit den Merkmalen des Anspruchs 1 gelöst.

Weitere vorteilhafte Ausgestaltungen des erfindungsgemäßen Verfahrens sind den Ansprüchen 2 bis 10 zu entnehmen.

Die mit der Erfindung erzielbaren Vorteile bestehen insbesondere darin, daß dem Anforderungsprofil an eine Fahrstrategie für ein stufenloses Getriebe in besonderem Maße Rechnung getragen wird. Die Betriebspunktvorgabe ist auf einen Fahrbereich begrenzt, dessen Grenzen variabel sind. Die theoretischen Beschleunigungswerte werden unter Berücksichtigung dieser Grenzen errechnet. Unter Berücksichtigung des Fahrerwunsches wird eine Beschleunigung vorgegeben, die eine Berechnung der Verstellgeschwindigkeit und der Übersetzung ermöglicht. Hierbei wird der Verlauf der Motordrehzahl in der Weise beeinflußt, daß eine Abhängigkeit zwischen der Motordrehzahl und der Drehzahl der Sekundärscheibe des stufenlosen Getriebes herbeigeführt wird. In besonders vorteilhafter Weise wird während einer Veränderung der Übersetzung die Motordrehzahl geführt, so daß ein unerwünschtes Absinken bzw. Ansteigen der Motordrehzahl - ohne jeglichen Bezug auf die Abtriebs-Scheibendrehzahl - vermieden wird. Falls erforderlich, kann ein Verlauf für die Motordrehzahl vorgegeben werden. Zudem ist eine Begrenzung der maximalen Verstellgeschwindigkeit fallweise von Vorteil.

Weitere, für die Erfindung wesentliche Merkmale sowie die daraus resultierenden Vorteile sind der nachfolgenden Beschreibung eines Ausführungsbeispiels anhand der Zeichnungen zu entnehmen.
Es zeigen:

Fig. 1    ein Schema eines stufenlosen Getriebes innerhalb eines Fahrzeugs und

Fig. 2    ein Blockschaltbild eines Regelkreises zur Regelung der Übersetzung eines stufenlosen Getriebes nach Fig. 1.

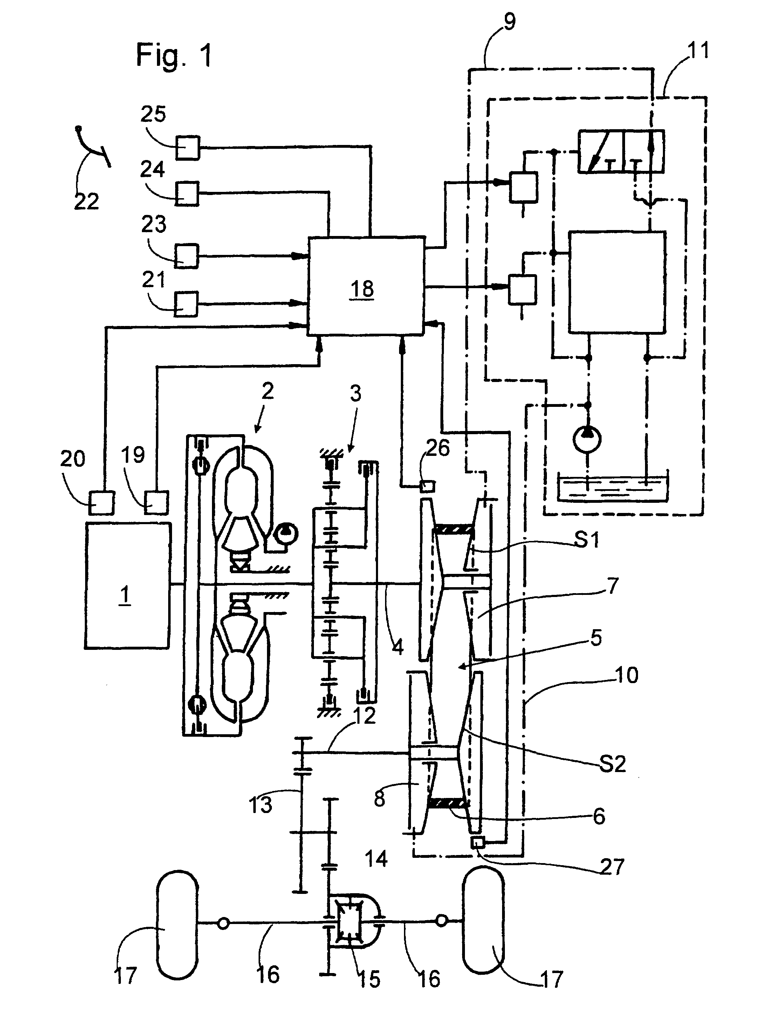

Fig. 1 zeigt schematisch ein stufenloses Getriebe:
Eine Antriebseinheit 1, vorzugsweise eine Brennkaftmaschine, treibt eine Anfahreinheit, bevorzugt einen hydrodynamischen Drehmomentwandler 2, an. Dem hydrodynamischen Drehmomentwandler 2 ist ein Wendesatz in Form eines Planetengetriebes 3 nachgeschaltet. Mit diesem können die Fahrtrichtungen Vorwärts oder Rückwärts über geeignete Schaltelemente (Kupplung bzw. Bremse) geschaltet werden.

Eine Ausgangswelle 4 treibt ein stufenloses Getriebe 5 (Variator) an. Dieses stufenlose Getriebe besteht im wesentlichen aus einer Primärscheibe S1 und einer Sekundärscheibe S2, die aus paarweise angeordneten Kegelscheiben gebildet werden und zwischen sich ein Umschlingungsorgan 6 aufnehmen. Ein Primärzylinder 7 und ein Sekundärzylinder 8 sind über Hydraulikleitungen 9 und 10 an eine Hydrauliksteuerung 11 angeschlossen.

Eine Abtriebswelle 12 treibt über Zahnradpaarungen 13 und 14 und ein Differential 15 die Achshalbwellen 16 der angetriebenen Räder 17 eines selbst nicht dargestellten Fahrzeugs an.

Das stufenlose Getriebe 5 wird durch eine elektronische Getriebesteuerung 18 gesteuert. Aufgabe der Getriebesteuerung ist es, die Übersetzung nach einer vorgegebenen Betriebsstrategie zu verstellen. Hierzu ist die Verarbeitung einer Vielzahl von Betriebsparametern erforderlich. Beispielsweise erfaßt ein Sensor 19 die Eingangsvariable: aktuelle Drosselklappenstellung ($\alpha\_DK$). Mit einem Sensor 20 wird die Ist-Motordrehzahl n_Mot erfaßt. Ein Sensor 21 erfaßt die Stellung eines Steuerorgans 22, mit dem der Fahrer des Fahrzeugs einen Leistungsbedarf anmeldet. Ein Sensor 23 meldet einen manuellen Fahrereingriff.

Die Aufzählung der möglichen Betriebsparameter (Eingangsvariablen) ist unvollständig. Beispielsweise kann zu diesen Größen die Temperatur der Hydraulikflüssigkeit zählen. Diese wird mit Hilfe eines Temperatursensors 24 erfaßt. Für bestimmte Fahrsituationen müssen weitere Parameter verarbeitet werden. Um Kurvenfahrt zu erkennen, ist es sinnvoll, die Querbeschleunigung und/oder Raddrehzahldifferenzen zu verwerten. Dies geschieht mit einem weiteren Sensor 25.

Mit Hilfe eines Drehzahlsensors 26 wird die Drehzahl n_S1 der Primärscheibe überwacht. Ein weiterer Sensor 27 liefert die Drehzahl n_S2 der Sekundärscheibe. Die Eingangsvariablen werden durch die elektronische Getriebesteuerung zu Ausgangsvariablen mit unterschiedlichen Zweckbestimmungen (Informationen zur Anzeige von Systemzuständen, Steuersignale für Stellglieder usw.) verarbeitet. Einige der Ausgangsvariablen liegen als Eingangsvariable an der Hydrauliksteuerung 11 an, um die Betätigung von Elektromagnetventilen auszulösen.

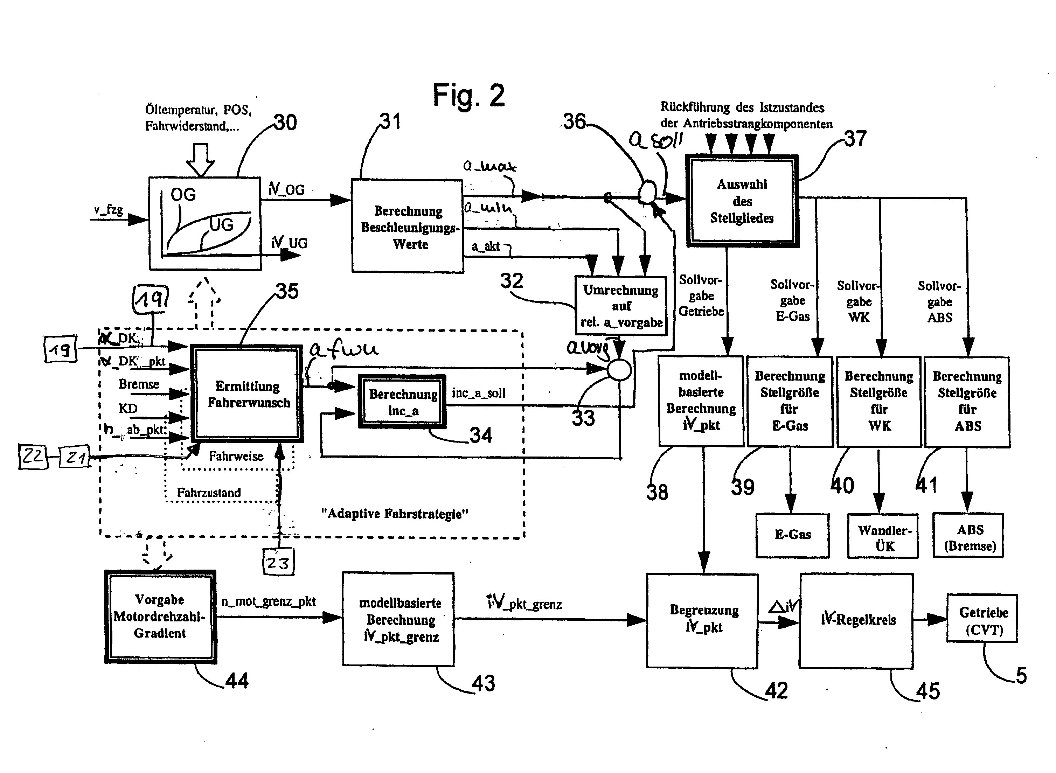

Anhand der Fig. 2, die ein Signalflußbild einer Regelung für den Antriebsstrang des Fahrzeugs wiedergibt, wird die zur Verstellung des stufenlosen Getriebes eingesetzte Betriebsstrategie erläutert.

In einem ersten Funktionsblock 30 wird ein Fahrbereich generiert, der durch eine untere Kennlinie UG und eine obere Kennlinie OG begrenzt wird. Die Kennlinien UG und OG werden durch Wertepaare der Übersetzung iV bzw. der Drehzahl der Primärscheibe n_S1 bzw. der Fahrbeschleunigung a und der Fahrzeuggeschwindigkeit vF generiert. Anstelle der erwähnten Parameter können gleichwertige Größen gesetzt werden. Durch den Fahrbereich sind die möglichen Betriebspunktvorgaben gegeben. Eine aktuelle Betriebspunktvorgabe B_akt liegt im vorgegebenen Fahrbereich. Ihre Lage bzw. -veränderung in Vertikalrichtung wird im wesentlichen durch die Betriebsstrategie bestimmt, während das Maß der horizontalen Verschiebung aus der Fahrzeuggeschwindigkeit vF resultiert. Der schematisch eingezeichnete Fahrbereich ist vorzugsweise veränderlich. Er kann durch Verschiebung der Kennlinien UG und OG, die die aktuellen Bereichsgrenzen darstellen, variiert werden. Ein bevorzugtes Verfahren zur Vorgabe eines Betriebspunktes in einem dynamischen Fahrbereich ist in der deutschen Patentanmeldung 196 00 915.4 vom 12.01.96 der Anmelderin erläutert. Insoweit wird auf die dort gemachten Ausführungen ergänzend verwiesen.

Der nachfolgenden Erläuterung der erfindungsgemäßen Betriebsstrategie sei vorweggenommen, daß in die Veränderung des Übersetzungsverhältnisses des stufenlosen Getriebes eingeht:

a) eine Momentenbilanz an der Getriebeausgangswelle bzw. an den angetriebenen Rädern;
b) eine Berücksichtigung bzw. Berechnung von Beschleunigungen, ausgehend von einem aktuellen Betriebspunkt B_akt, und zwar: die aktuelle Beschleunigung a_akt, die minimale und maximale Beschleunigung a_min bzw. a_max, ausgehend vom aktuellen Motormoment M _mot sowie dem aktuellen Fahrwiderstandsmoment im aktuellen Betriebspunkt B_akt und bezogen auf die untere Grenzinie UG und die obere Grenzlinie OG des dynamischen Fahrbereichs;
c) die Berücksichtigung des Fahrerwunsches, d. h. insbesondere des Wunsches zu Beschleunigen oder zu Verzögern;
d) eine Verstellung der Übersetzung iV mit einem Verstellgradienten, der sich an vorgegebenen Grenzwerten der Motordrehzahl während der Verstellung orientiert und ggf. einer Begrenzung einer maximalen Verstellgeschwindigkeit pro Zeiteinheit iV_pkt und
e) eine Verstellung des E-Gas und eine Verstellung der Wandlerkupplung.

Beschleunigung:

Über die Momentenbilanz an den Rädern 17 wird die kleinste bzw. größte mögliche Beschleunigung a_min bzw. a_max berechnet. Zusätzlich wird die aktuelle Beschleunigung a_akt gemessen bzw. geschätzt. Die Generierung der Werte dieser Beschleunigungen erfolgt innerhalb eines Funktionsblocks 31.

Die Beschleunigung läßt sich auf die Sekundärscheibe S2 bezogen ausdrücken als Veränderung der Winkelgeschwindigkeit der Sekundärscheibe pro Zeiteinheit:

$d\omega\_S2 : dt$. Demnach ergeben sich die Werte nach folgenden Beziehungen:

$$\frac{d\omega\_S2}{dt}_{min} = \frac{a\_0}{iv\_min} * M\_mot - \frac{a\_1}{iv\_min} * \omega^2\_S1\_min + a\_2 - \frac{1}{iv\_min}\frac{\omega\_S1}{iv\_min}\frac{div}{dt} - M\_\gamma - a\_4M\_Brems$$

$$\frac{d\omega\_S2}{dt}_{max} = \frac{a\_0}{iv\_max} * M\_mot - \frac{a\_1}{iv\_max} * \omega^2\_S1\_max + a\_2 - \frac{1}{iv\_max}\frac{\omega\_S1}{iv\_max}\frac{div}{dt} - M\_\gamma - a\_4M\_Brems$$

$$\frac{d\omega\_S2}{dt}_{akt} = \frac{a\_0}{iv} * M\_mot - \frac{a\_1}{iv} * w^2\_S1 + \frac{a\_2 - 1}{iv} * \frac{\omega\_S1}{iv}\frac{div}{dt} - M\_\gamma - a\_4M\_Brems$$

Der Ausdruck M_γ seht für das Moment beim Befahren von Steigungen, während der Ausdruck M_Brems das Bremsmoment bedeutet. Die Ermittlung von M_γ bzw. M_Brems ist als Schätzwert möglich, daher ergibt der Ausdruck dω_S2 : dt keinen exakten, sondern tendenziellen wert. Im übrigen gelten die Gleichungen nur für einen Drehmomentwandler im geschlossenen Zustand.

Die Beschleunigungswerte a_max, a_min und a_akt werden in einer Umrechnungsstufe 32 in normierte Werte, vorzugsweise in Prozentwerte, umgesetzt.

Es sei angenommen, daß das Fahrzeug (zur Erleichterung der Applikation) im stationären Betrieb fährt. Der Betriebspunkt soll auf einen (neuen) aktuellen Betriebspunkt B_akt verlagert werden. B_akt liegt dann im Schnittpunkt einer aktuellen Fahrwiderstands-Kennlinie F_wid_akt mit der Motormomenten-Kennlinie M_Mot_akt. Um vom alten auf den neuen Betriebspunkt B_akt zu gelangen, ist eine der aktuellen Betriebssituation angepaßte Beschleunigung erforderlich. Bezogen auf die untere Grenze UG ist eine Beschleunigung a_min möglich. Bezogen auf die obere Grenze OG ergibt sich ein Wert von a_max. Die Fahrervorgabe wird bei einem Beschleunigungswunsch innerhalb der Grenzwerte umgesetzt. Dieser aus dem Fahrerwunsch abgeleitete Beschleunigungswert sei mit a_fwu (Beschleunigung aufgrund des Fahrerwunsches) bezeichnet.

Ausgehend von der aktuellen Beschleunigung besteht die Aufgabe der Strategie darin, den Differenzbetrag zur vom Fahrer gewünschten Beschleunigung auszugleichen.

In der Umrechnungsstufe 32 wird die aktuelle Beschleunigung in den Grenzen UG und OG und damit zu den Werten a_min und a_max in Relation gesetzt. Am Ausgang wird ein Signal geliefert, das der normierten Beschleunigungsvorgabe a_vorg (in Prozent) entspricht. Aus diesem und dem Wert, der dem normierten Fahrerwunsch in Prozent entspricht, wird die Differenz gebildet (Subtraktionsstelle 33) und einem Funktiönsblock 34 aufgeschaltet.

Die Beschleunigung bzw. Verzögerung, die dem Fahrerwunsch a_fwu in Prozent entspricht, liegt ebenfalls am Funktionsblock 34 als Eingangssignal an. Diese Größe wird in einem Funktionsblock 35 ermittelt. An diesem liegen Eingangsvariable an, die einen Beschleunigungs- bzw. Verzögerungwunsch repräsentieren. Insbesondere ist dies die aktuelle Drosselklappenstellung $\alpha$_DK, die Veränderung der Drosselklappenstellung pro Zeiteinheit, der Drosselklappengradient $\alpha$_DKi, ein Bremssignal, das Signal KD für Kick-down sowie ggf. weitere Signale. Zu diesen Signalen zählt vorzugsweise die Veränderung der Abtriebsdrehzahl (Drehzahl der Ausgangswelle 12 bzw. Raddrehzahlen). Dieses Signal ist mit n_ab_pkt bezeichnet.

Mit dem Funktionsblock 34 werden Inkremente gebildet, die in der Summe zu einer Soll-Beschleunigung a_soll führen. Diese Inkremente sind mit inc_a_soll bezeichnet und werden als Ausgangsvariable des Funktionsblocks 34 einer Summationsstelle 36 zugeführt. Die Summe bildet die bereits erwähnte Beschleunigungsvorgabe a_soll. a_max wird als Standardvorgabe (ökonomisch) gewählt und ist die Basis für die vom Fahrer bzw. der Umwelt initiierten Beschleunigungsänderungen.

Mit der Beschleunigungsvorgabe a_soll als Eingangsgröße wird in einem Funktionsblock 37 mindestens ein Stellglied ausgewählt. Dieser Funktionsblock 37 leistet sozusagen die "Kopfarbeit" und verteilt die Beschleunigungsvorgabe a_soll auf eine Sollvorgabe für das Getriebe und/oder eine Sollvorgabe für das E-Gas und/oder eine Sollvorgabe für die Wandlerüberbrückungskupplung und/oder eine Sollvorgabe für das ABS. Dies setzt auch voraus, daß am Funktionsblock 37 als Eingangssignale die Rückführungssignale zum Ist-Zustand der entsprechenden Antriebsstrangkomponenten anliegen. Nur so kann die angestrebte Verteilung bewirkt werden.

Die vorstehend genannten Sollvorgaben werden weiteren Funktionsblöcken aufgeschaltet.

Im Funktionsblock 38 wird eine modellbasierte Berechnung der Verstellgeschwindigkeit für die Übersetzung des stufenlosen Getriebes innerhalb einer vorgegebenen Zeiteinheit berechnet. Diese Größe ist mit iV_pkt bezeichnet. Ziel ist es, die Verstellgeschwindigkeit für die Übersetzung pro Zeiteinheit so zu führen, daß bei einer Beschleunigung bzw. Verzögerung die Motordrehzahl n_Mot in Abhängigkeit von der aktuellen Drehzahl der Sekundärscheibe n_S2 geführt wird. Bei einem positiven Beschleunigungswunsch ist nur ein bestimmter Motordrehzahlverlauf vom subjektiven Fahreindruck (Komfort) her zulässig. Die Motordrehzahl wird etwa in der Form geführt, daß für den Fahrer in jedem Fall ein positives Beschleunigungsempfinden spürbar ist.

Im Funktionsblock 39 wird die Stellgröße für das E-Gas berechnet. In den Funktionsblöcken 40 und 41 erfolgen Berechnungen zur Stellgröße für die Wandlerkupplung und für das ABS (Betätigung der Bremse).

Die im Funktionsblock 38 generierte Größe iV_pkt wird einer Begrenzungsstufe 42 aufgeschaltet. In dieser Begrenzungsstufe 42 erfolgt ein Vergleich einer Grenzgeschwindigkeit der Übersetzungsverstellung pro Zeiteinheit, die mit iV_pkt_grenz bezeichnet ist und die von einem Funktionsblock 43 generiert wird. Hier erfolgt eine modellbasierte Berechnung dieser Größe in Abhängigkeit eines vorgegebenen (Grenz-)Drehzahlgradienten des Motors, der mit n_Mot_grenz_pkt bezeichnet ist. Diese Größe wiederum wird von einem Funktionsblock 44 geliefert.

Die Einbeziehung eines Grenz-Drehzahlgradienten des Motors eröffnet zusätzliche Möglichkeiten für die Betriebsstrategie, z. B. beim Anfahren mit geringer Last und wirtschaftlicher Betriebsweise: Um die zum Anfahren notwendige Leistungsreserve bereitzustellen, ist eine anfängliche Überhöhung der Motordrehzahl erforderlich. Beim nachfolgenden Übergang auf den allgemein niedriger liegenden (ökonomischen) Betriebspunkt wird der entsprechende negative Gradient der Motordrehzahl auf ein vom Fahrer akzeptiertes Maß begrenzt.

Die Verstellung des stufenlosen Getriebes auf einen neuen Sollwert der Übersetzung iV_soll in einem (neuen) aktuellen Betriebspunkt B_akt erfolgt in Abhängigkeit des ermittelten Fahrerwunsches zwischen zwei Grenzwerten eines dynamischen Fahrbereichs und unter Berücksichtigung eines Verlaufes der Motordrehzahl, der sich am Verlauf der Drehzahl der Sekundärscheibe und am aktuellen Fahrzustand bzw. der aktuellen Fahrsituation orientiert und unter Einbezug des E-Gas, der Steuerung der Wandlerüberbrückungskupplung und des ABS bzw. des Bremswunsches.

Die Stellgröße $\Delta$_iV wird an einen Regelkreis - Funktionsblock 45 - ausgegeben, der die Verstellung des stufenlos verstellbaren Getriebes 5 übernimmt.

Bezugszeichen

| | |
|---|---|
| 1 | Antriebseinheit |
| 2 | Drehmomentwandler |
| 3 | Planetengetriebe |
| 4 | Ausgangswelle |
| 5 | stufenloses Getriebe |
| 6 | Umschlingungsorgan |

EP 0 916 042 B1

| 7 | Primärzylinder |
|---|---|
| 8 | Sekundärzylinder |
| 9, 10 | Hydraulikleitungen |
| 11 | Hydrauliksteuerung |
| 12 | Abtriebswelle |
| 13, 14 | Zahnradpaarungen |
| 15 | Differential |
| 16 | Achshalbwelle |
| 17 | angetriebene Räder |
| 18 | Getriebesteuerung |
| 19 | Sensor Drosselklappenstellung |
| 20 | Sensor Ist - Motordrehzahl |
| 21 | Sensor Stellung Steuerorgan |
| 22 | Steuerorgan |
| 23 | Sensor manueller Fahrereingriff |
| 24 | Temperatursensor |
| 25 | Sensor Kurvenfahrt |
| 26 | Drehzahlsensor Primärscheibe. |
| 27 | Sensor Drehzahl Sekundärscheibe |
| 30 | Funktionsblock Generierung Fahrbereich |
| 31 | Funktionsblock Generierung Beschleunigungen |
| 32 | Umrechnungsstufe |
| 33 | Subtraktionsstelle |
| 34 | Funktionsblock Inkrementbildung |
| 35 | Funktionsblock Ermittlung Fahrerwunsch |
| 36 | Summationsstelle |
| 37 | Funktionsblock Stellgliedauswahl |
| 38 | Funktionsblock modellbasierte Verstellgeschwindigkeits berechnung |
| 39 | Funktionsblock Berechnung Stellgröße für E-Gas |
| 40 | Funktionsblock Berechung Stellgröße für Wandlerkupplung |
| 41 | Funktionsblock Berechnung Stellgröße für ABS |
| 42 | Begrenzungsstufe |
| 43 | Funktionsblock Generierung Grenzgeschwindigkeit der Übersetzungs-verstellung |
| 44 | Funktionsblock Vorgabe Motordrehzahlgradient |
| 45 | Funktionsblock übersetzungsregelkreis |

**Patentansprüche**

**1.** Verfahren zur Vorgabe eines Betriebspunktes eines automatischen Getriebes, insbesondere eines stufenlosen Getriebes, mit Mitteln zum Erfassen von Eingangssignalen, die von einem Fahrer-Fahrzeugsystem abgeleitet sind und die mindestens zu einem Ausgangssignal verarbeitet werden, durch das im Rahmen einer Betriebsstrategie eine Vorgabe des Übersetzungsverhältnisses des Getriebes und/oder eine Vorgabe der Drehzahl eines Antriebsmotors und/oder eine Vorgabe der Fahrzeugbeschleunigung herbeigeführt wird,

wobei

- ein Fahrbereich mit einer unteren und oberen Grenze (UG, OG) generiert wird, in dem das Getriebe innerhalb möglicher Betriebspunktvorgaben aus Fahrzeuggeschwindigkeit (vF) und Übersetzungsverhältnis (iV) oder gleichwertiger Größen betrieben werden soll;
- bei einer Veränderung der Betriebspunktvorgabe **eine** aktuelle Beschleunigung (a_akt) des Kraftfahrzeugs eine minimale theoretische Beschleunigung (a_min) des Kraftfahrzeugs und eine maximale theoretische Beschleunigung des Kraftfahrzeugs (a_max) berechnet wird, als Funktion eines aktuellen Motormoments (M_mot) und eines aktuellen Fahrwiderstandes im aktuellen Betriebspunkt (B_akt) des Getriebes und als Funktion der unteren und oberen Grenze (UG, OG);
- ein Wunsch des Fahrers zu Beschleunigen bzw. zu Verzögern (a_fwu) des Fahrzeugs aus Eingangsgrößen des Fahrer-Fahrzeugsystems ermittelt wird, zumindest unter Berücksichtigung der Stellung eines Steuerorgans (21,22) mit dem der Fahrer des Kraftfahrzeugs einen Leistungsbedarf anmeldet;
- und wobei aus den Werten der aktuellen Beschleunigung (a_akt), der minimalen Beschleunigung (a_min) und der maximalen Beschleunigung (a_max) des Kraftfahrzeugs sowie des Fahrerwunsches (a_fwu) eine Soll-Beschleunigung (a_soll) vorgegeben wird, aus der eine Veränderung der Übersetzung pro Zeiteinheit (iV_pkt) des stufenlosen Getriebes berechnet wird, die sich an der Motordrehzahl während der Veränderung der Übersetzung des Getriebes orientiert.

2. Verfahren nach Anspruch 1, **dadurch gekennzeichnet, daß** während einer Veränderung der Übersetzung des stufenlosen Getriebes ein oberer Grenzwert für die Motordrehzahl (n_Mot_grenz) vorgegeben wird, aus dem ein Grenzwert für die Veränderung der Übersetzung pro Zeiteinheit (iV_pkt_grenz) berechnet wird, der bei Erreichen einer maximal zulässigen Verstellgeschwindigkeit begrenzt wird.

3. Verfahren nach den Ansprüchen 1 und 2, **dadurch gekennzeichnet, daß** die Beschleunigung (a_vorg) nach einer Übergangsfunktion in eine Soll-Beschleunigung (a_soll) überführt wird.

4. Verfahren nach Anspruch 3, **dadurch gekennzeichnet, daß** die Überführung auf die Soll-Beschleunigung (a_soll) in Inkrementen (inc_a_soll) erfolgt.

5. Verfahren nach Anspruch 1, **dadurch gekennzeichnet, daß** die Veränderung der Übersetzung pro Zeiteinheit des stufenlosen Getriebes (iV_pkt) modellbasiert berechnet wird.

6. Verfahren nach Anspruch 2, **dadurch gekennzeichnet, daß** die Berechnung des Grenzwertes für die Veränderung der Übersetzung pro Zeiteinheit (iV_pkt_grenz) modellbasiert erfolgt.

7. Verfahren nach Anspruch 1, **dadurch gekennzeichnet, daß** der Fahrerwunsch in einem Funktionsblock (35) ermittelt wird, an dem Eingangsvariable anliegen, die einen Beschleunigungs- bzw. Verzögerungswunsch repräsentieren.

8. Verfahren nach Anspruch 7, **dadurch gekennzeichnet, daß** der Fahrerwunsch (a_fwu) in einem Prozentwert ausgedrückt wird, der in Relation zur maximalen theoretischen Beschleunigung (a_max) steht.

9. Verfahren nach Anspruch 1, **dadurch gekennzeichnet, daß** die Verstellgeschwindigkeit für die Übersetzung des stufenlosen Getriebes so geführt wird, daß bei einer Beschleunigung bzw. Verzögerung deskraftfahrzeugs die Motordrehzahl n_Mot in Abhängigkeit von der aktuellen Drehzahl der Sekundärscheibe (n_S2) geführt wird.

10. Verfahren nach Anspruch 9, **dadurch gekennzeichnet, daß** der negative Gradient der Motordrehzahl (n_Mot) bei einem auf einen Anfahrvorgang folgenden Übergang auf den niedriger liegenden Betriebspunkt auf ein vom Fahrer akzeptiertes Maß begrenzt ist.

**Claims**

1. Method for specifying a working point of an automatic gearbox, in particular a continuously variable gearbox, with means for acquiring input signals, which are derived from a driver-vehicle system and processed at least into one output signal, by means of which a stipulation of the transmission ratio of the gearbox and/or a stipulation of the speed of a drive engine and/or a stipulation of the vehicle acceleration is produced in the context of an operating strategy,

- a driving range being generated with a lower and upper limit (UG, OG), in which range the gearbox is to be operated within possible working point stipulations from the. vehicle velocity (vF) and transmission ratio (iV) or equivalent variables;
- in the event of a change in the working point stipulation a current acceleration (a_akt) of the motor vehicle, a minimum theoretical acceleration (a_min) of the motor vehicle and a maximum theoretical acceleration of the motor vehicle (a_max) being calculated, as a function of a current engine torque (M_mot) and a current driving resistance at the current working point (B_akt) of the gearbox and as a function of the lower and upper limit (UG, OG);
- a wish of the driver to accelerate or to decelerate (a_fwu) the vehicle being ascertained from input variables of the driver-vehicle system, at least taking into account the position of a control organ (21, 22) with which the driver of the motor vehicle registers a power requirement;
- and from the values of the current acceleration (a_akt), the minimum acceleration (a_min) and the maximum acceleration (a_max) of the motor vehicle as well as of the wish of the driver (a_fwu) a target acceleration (a_soll) being specified, from which a change in the transmission ratio per unit of time (iV_pkt) of the continuously variable gearbox is calculated, which is oriented to the engine speed during the change in transmission ratio of the gearbox.

2. Method according to claim 1, **characterized in that** during a change in the transmission ratio of the continuously variable gearbox, an upper limit value for the engine speed (n_Mot_grenz) is specified, from which a limit value for the change in the transmission ratio per unit of time (iV_pkt_grenz) is calculated, which is limited when a maximum permitted adjusting velocity is reached.

3. Method according to claims 1 and 2, **characterized in that** the acceleration (a_vorg) is transferred following a transition function to a target acceleration (a_soll).

4. Method according to claim 3, **characterized in that** the transfer to the target acceleration (a_soll) is effected in increments (inc_a_soll).

5. Method according to claim 1, **characterized in that** the change in the transmission ratio per unit of time of the continuously variable gearbox (iV_pkt) is calculated based on a model.

6. Method according to claim 2, **characterized in that** the limit value for the change in the transmission ratio per unit of time (iV_pkt_grenz) is calculated based on a model.

7. Method according to claim 1, **characterized in that** the wish of the driver is determined in a function block (35) at which input variables are present that represent a wish to accelerate or decelerate.

8. Method according to claim 7, **characterized in that** the wish of the driver (a_fwu) is expressed in a percentage value, which is related to the maximum theoretical acceleration (a_max).

9. Method according to claim 1, **characterized in that** the adjusting velocity for the transmission ratio of the continuously variable gearbox is controlled such that the engine speed n_Mot is dependent on and controlled by the current speed of the secondary disc (n_S2) on acceleration or deceleration of the motor vehicle.

10. Method according to claim 9, **characterized in that** the negative gradient of the engine speed (n_Mot) is limited to an extent accepted by the driver in the event of a transition following a start-up process to the lower lying working point.

**Revendications**

1. Procédé de prédétermination d'un point de fonctionnement d'une boîte de vitesses automatique, plus particulièrement d'une boîte de vitesses progressive, avec des moyens de détection de signaux d'entrée qui proviennent d'un système véhicule-conducteur et qui sont convertis au moins en un signal de sortie à l'aide duquel, dans le cadre d'une stratégie de fonctionnement, une prédétermination du rapport de démultiplication de la boîte de vitesses et/ou une prédétermination de la vitesse de rotation d'un moteur d'entraînement et/ou une prédétermination de l'accélération du véhicule est possible, dans lequel

   - un domaine de conduite est généré avec une limite inférieure et une limite supérieure (UG, OG), du fait que la boîte de vitesse peut être utilisée à l'intérieur de prédéterminations possibles de points de fonctionnement constitués d'une vitesses de véhicule (vF) et d'un rapport de démultiplication (iV) ou de grandeurs équivalentes ;
   - lors d'une modification de la prédétermination du point de fonctionnement, une accélération actuelle (a_akt) du véhicule automobile, une accélération actuelle minimale théorique (a_min) du véhicule automobile et une accélération actuelle maximale théorique (a_max) du véhicule automobile, est calculée en fonction d'un couple actuel du moteur (M_mot) et d'une résistance actuelle à la marche dans le point de fonctionnement actuel (B_akt) de la boîte de vitesses et en fonction de la limite inférieure et supérieure (UG, OG)
   - un souhait du conducteur d'accélérer ou de ralentir (a_fwu) le véhicule est déterminé à partir de grandeurs d'entrée du système véhicule-conducteur, en prenant en compte au moins la position d'un organe de commande (21, 22) avec lequel le conducteur du véhicule automobile envoie une demande de puissance ; et dans lequel

- à partir des valeurs de l'accélération actuelle (a-akt), de l'accélération minimale (a_min) et de l'accélération maximale (a_max) du véhicule automobile ainsi que du souhait du conducteur (a_fwu), une accélération de consigne (a_soll) est déterminée, à partir de laquelle une modification de la démultiplication par unité de temps (iV_pkt) de la boîte de vitesses progressive est calculée, qui s'oriente selon la vitesse de rotation du moteur pendant la modification de la démultiplication de la boîte de vitesses.

2. Procédé selon la revendication 1, **caractérisé en ce que**, pendant la modification de la démultiplication de la boîte de vitesses progressive, une valeur limite supérieure de la vitesse de rotation du moteur (n_Mot_grenz) est prédéterminée, à partir de laquelle une valeur limite pour la modification de la démultiplication par unité de temps (iV_pkt_grenz) est calculée, qui est limité lorsqu'une vitesse de réglage maximale admissible est atteinte.

3. Procédé selon les revendications 1 et 2, **caractérisé en ce que** l'accélération (a_vorg) est transformée en une accélération de consigne (a_soll) selon une fonction de transition.

4. Procédé selon la revendication 3, **caractérisé en ce que** la transformation en une accélération de consigne (a_soll) est réalisée par incrémentations (inc_a_soll).

5. Procédé selon la revendication 1, **caractérisé en ce que** la modification de la démultiplication par unité de temps de la boîte de vitesses progressive (iV_pkt) est calculée sur la base d'un modèle.

6. Procédé selon la revendication 2, **caractérisé en ce que** le calcul de la valeur limite pour la modification de la démultiplication par unité de temps (iV_pkt_grenz) est réalisé sur la base d'un modèle.

7. Procédé selon la revendication 1, **caractérisé en ce que** le souhait du conducteur est déterminé dans un bloc fonctionnel (35) auquel sont appliquées des variables d'entrée qui constituent un souhait d'accélération ou de ralentissement.

8. Procédé selon la revendication 7, **caractérisé en ce que** le souhait du conducteur (a_fwu) est exprimé à l'aide d'un pourcentage qui est en relation avec l'accélération maximale théorique (a_max).

9. Procédé selon la revendication 1, **caractérisé en ce que** la vitesse de réglage pour la démultiplication de la boîte de vitesses progressive est commandée de telle sorte que, lors d'une accélération ou d'un ralentissement du véhicule, la vitesse de rotation (n_Mot) soit commandée en fonction de la vitesse de rotation actuelle du disque secondaire (n_S2).

10. Procédé selon la revendication 9, **caractérisé en ce que** le gradient négatif de la vitesse de rotation du moteur (n_Mot) est limité dans une mesure acceptée par le conducteur lors d'une transition vers le point de fonctionnement situé plus bas à la suite d'un processus de démarrage.

Fig. 1

Fig. 2

EP 0 916 042 B1

11